# EUROPEAN PATENT SPECIFICATION

(11) **EP 4 468 621 B1**
(45) Date of publication and mention of the grant of the patent: **03.06.2026**
(21) Application number: 24174112.3
(22) Date of filing: 03.05.2024
(51) Int. Cl.: H04B 7/06, H04B 7/08

(54) **BEAM PAIR SWITCHING**
STRAHLPAARUMSCHALTUNG
COMMUTATION DE PAIRE DE FAISCEAUX

(30) Priority: 19.05.2023 IN 202341035133
(43) Date of publication of application: 27.11.2024
(73) Proprietor: Nokia Technologies Oy, 02610 Espoo (FI)
(72) Inventor: CAPORAL DEL BARRIO, Samantha, 9000 Aalborg (DK); DALSGAARD, Lars, 90230 Oulu (FI); DIMNIK, Riikka Karoliina, 02880 Kirkkonummi (FI); SHETTY, Smita, 560023 Karnataka (IN)
(74) Representative: Script Intellectual Property LLP

(56) References cited:
- WO-A1-2022/152925
- NOKIA ET AL: "Enhancements on Beam Management for Multi-TRP/Panel Transmission", vol. RAN WG1, no. e-Meeting; 20200817 - 20200828, 7 August 2020 (2020-08-07), XP051915491, Retrieved from the Internet <URL:https://ftp.3gpp.org/tsg_ran/WG1_RL1/TSGR1_102-e/Docs/R1-2006846.zip R1-2006846.docx> [retrieved on 20200807]
- NOKIA ET AL: "Discussion on Multi-Rx L1 measurements", vol. 3GPP RAN 4, no. Incheon, Korea; 20230522 - 20230526, 15 May 2023 (2023-05-15), XP052386334, Retrieved from the Internet <URL:https://ftp.3gpp.org/tsg_ran/WG4_Radio/TSGR4_107/Docs/R4-2307188.zip R4-2307188 Discussion on MultiRx L1 measurements.docx> [retrieved on 20230515]

## Description

### FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to apparatuses, systems, and/or methods for beam pair switching.

### BACKGROUND:

Examples of mobile or wireless telecommunication systems may include the Universal Mobile Telecommunications System (UMTS) Terrestrial Radio Access Network (UTRAN), LTE Evolved UTRAN (E-UTRAN), LTE-Advanced (LTE-A), MulteFire, LTE-A Pro, fifth generation (5G) radio access technology or NR access technology, and/or 5G-Advanced. 5G wireless systems refer to the next generation (NG) of radio systems and network architecture. 5G network technology is mostly based on NR technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the IoT.
3GPP TSG RAN WG1 #102-e 17 - 28 August 2020, Agenda item 8.1.2.3 Nokia, Nokia Shanghai Bell 'Enhancements on Beam Management for Multi-TRP/panel Transmission' R1-2006946 discusses beam reception from multiple TRPs at a multi-panel UE and allows group-based beam reporting for TRPs allowing the network to derive beam pairs that can be used simultaneously.
3GPP TSG-RAN WG$ Meeting #107 22 - 26 May 2023 Nokia, Nokia Shanghai Bell 'Discussion on Multi-Rx L1 measurements' 8.8.3.2 R4-2307188 discusses aspects of group based beam reporting for multi Rx chain reception.
WO2022/152925 discusses beam management for beams coming from multiple TRPs and provides non-group based reporting to the individual TRPs.

### SUMMARY:

Some example embodiments are directed to a method. The method includes transmitting, to a network element, a report indicating status on whether at least one beam of at least one beam pair is interrupted or not when beam pair switching. The at least one beam pair includes at least a first beam associated with a first transmit and receive point, and a second beam associated with a second transmit and receive point. The method also includes receiving, in response to the report, scheduling for a radio transmission.

Other example embodiments are directed to an apparatus. The apparatus includes at least one processor and at least one memory including computer program code. The at least one memory and the computer program code are configured to, with storing instructions that, when executed by the at least one processor, cause the apparatus at least to transmit, to a network element, a report indicating status on whether at least one beam of at least one beam pair is interrupted or not when beam pair switching. The at least one beam pair includes at least a first beam associated with a first transmit and receive point, and a second beam associated with a second transmit and receive point. The apparatus is also caused to receive, in response to the report, scheduling for a radio transmission.

Other example embodiments are directed to a computer program comprising computer readable instructions stored thereon which when executed by a processor on an apparatus are operable to control the apparatus to perform a method. The method includes transmitting, to a network element, a report indicating status on whether at least one beam of at least one beam pair is interrupted or not when beam pair switching. The at least one beam pair includes at least a first beam associated with a first transmit and receive point, and a second beam associated with a second transmit and receive point. The method also includes receiving, in response to the report, scheduling for a radio transmission.

Some example embodiments are directed to a method. The method includes receiving, from a user equipment, a report indicating status on whether at least one beam of at least one beam pair is interrupted or not when beam pair switching. The at least
one beam pair includes at least a first beam associated with a first transmit and receive point, and a second beam associated with a second transmit and receive point. The method also includes scheduling the user equipment for a radio transmission in response to the report.

Other example embodiments are directed to an apparatus. The apparatus includes at least one processor and at least one memory including computer program code. The at least one memory and the computer program code are configured to, with storing instructions that, when executed by the at least one processor, cause the apparatus at least to receive, from a user equipment, a report indicating status on whether at least one beam of at least one beam pair is interrupted or not when beam pair switching. The at least one beam pair includes at least a first beam associated with a first transmit and receive point, and a second beam associated with a second transmit and receive point. The apparatus is also caused to schedule the user equipment for a radio transmission in response to the report.

Other example embodiments are directed to a computer program comprising computer readable instructions stored thereon which when executed by a processor on an apparatus are operable to control said apparatus to perform a method. The method includes receiving, from a user equipment, a report indicating status on whether at least one beam of at least one beam pair is interrupted or not when beam pair switching. The at least one beam pair includes at least a first beam associated with a first transmit and receive point, and a second beam associated with a second transmit and receive point. The method also includes scheduling the user equipment for a radio transmission in response to the report.

### BRIEF DESCRIPTION OF THE DRAWINGS:

For proper understanding of example embodiments, reference should be made to the accompanying drawings, wherein:
FIG. 1 illustrates an example group-based beam reporting.
FIG. 2 illustrates example independent beam management (IBM) and common beam management (CBM) definitions.
FIG. 3 illustrates an example intra-band carrier aggregation (CA) versus inter-band CA configuration with IBM and CBM operation.
FIG. 4 illustrates an example scenario of user equipment (UE) beam pair switching.
FIG. 5 illustrates an example beam switch interruption.
FIG. 6 illustrates an example UE indication to a network, according to certain example embodiments.
FIG. 7 illustrates another example UE indication to the network, according to certain example embodiments.
FIG. 8 illustrates an example flow diagram of a method, according to certain example embodiments.
FIG. 9 illustrates an example flow diagram of another method, according to certain example embodiments.
FIG. 10 illustrates a set of apparatuses, according to certain example embodiments.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for beam pair switching. For instance, certain example embodiments may consider methods for addressing interruption during beam pair switching, where the interruption may correspond to an unavailability of the UE for data scheduling in downlink/uplink (DL/UL), and/or may correspond to non-scheduling periods.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "base station", "cell", "node", "gNB", "network" or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

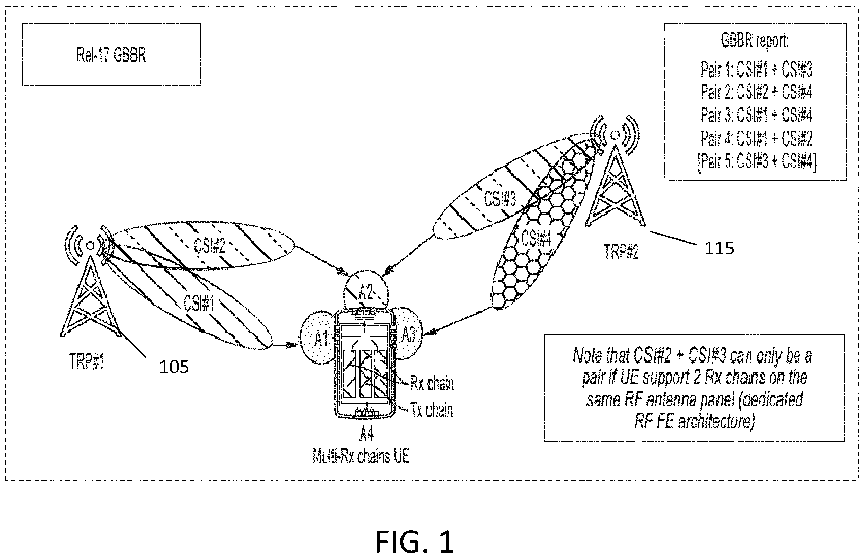

The technical specification of the 3^{rd} Generation Partnership Project (3GPP) Rel-18 describe a scenario where the user equipment (UE) may indicate with a capability, whether it supports receiving two physical downlink shared channels (PDSCH) simultaneously, and with different angle of arrivals. For instance, in Rel-17, RAN1 specified group-based beam reporting, where the UE reports N groups/pairs (i.e., beams that can be simultaneously received) of M beams (i.e., at least 2 beams in one group). The pairing may be performed by the UE according to its capabilities as illustrated in FIG. 1 with a three-panel UE and two Rx chains. For instance, FIG. 1 illustrates an example group-based beam reporting. In the example group-based beam reporting of FIG. 1, the multi-RX chains UE 100 may receive signals (e.g., channel state information (CSI) #1 and #2), and CSI from a second transmit and receive point 100 from a first transmit and receive point 105 (CSI #3 and #4). In the example illustrated in FIG. 1, CSI #1 and CSI #2 are transmitted from transmit and receive point (TRP) #1 to the multi-RX chains UE 100, and CSI #3 and CSI #4 are transmitted from TRP #2 110 to the multi-RX chains UE 100. In the example of FIG. 1, the number of groups N may be reported to TRP #1 and TRP #2, and the max(N) per SI report may be a UE capability where the UE 100 selects among {1, 2, 3, 4} groups. For example, the UE can inform the network that it can only report 1 group, or it can report 2 groups, or 3 or 4 groups. Thus, in FIG. 1, the multi-Rx chains UE 100 may report up to four groups. Additionally, the max(N) may be radio resource control (RRC) configured by the network.

RAN4 has defined IBM operation for frequency range 2 (FR2) inter-band carrier aggregation (CA) cases where IBM definitions are illustrated in FIG. 1. For the FR2 inter-band CA IBM operation, it may be considered that the UE is tracking DL reference signals from each source cell on the two component carriers. If the UE supports IBM for inter-band CA, the UE may track and change its beam setting independently for each band. Thus, the UE may be able to adapt its Rx spatial settings and adapt to the DL frame boundary of the two component carriers (CCs) independently. Accordingly, IBM may allow for more flexible deployment of cells on the different CCs in the different bands, which may be deployed with non-collocated TRPs.

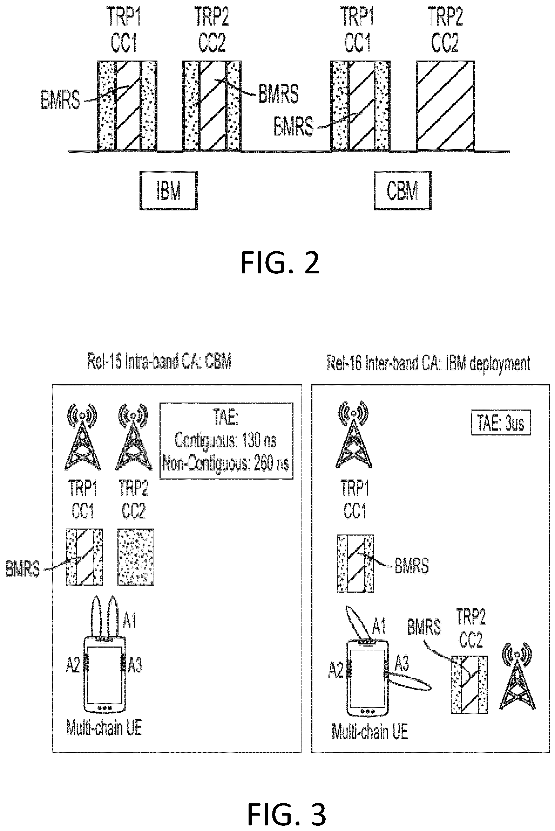

FIG. 2 illustrates example IBM and common beam management (CBM) definitions, and FIG. 3 illustrates an example intra-band CA versus inter-band CA configuration with IBM and CBM operation. As illustrated in FIG. 2, the context is a multi-TRP operation for CA, where there are two TRP scheduling data/to/from the UE (i.e., TRP1 and TRP2). FIG. 2 also illustrates beam management reference signals (BMRS). In IBM, there may be 1 BMRS per CC. In CBM, there may be only 1 BMRS for both CC. BMRS may be used for spatial tracking (e.g., could be synchronization signal block (SSB), CSI-RS, CSI with repetition 'on', etc.), or for time tracking (SSB, total radiated sensitivity (TRS), etc.). IBM may be most precise, but it has a cost because some scheduling opportunities need to be dedicated to reference signals (and not to data scheduling). On the other hand, CBM may be lighter in terms of resources utilized for reference signals, but may be less reliable because the UE may need to align in space and time to both TRPs, only having the reference signals of one TRP (some approximations at the UE may be needed). Additionally, the example in FIG. 3 includes timing alignment error (TAE) requirements. Although IBM and CBM were described under the context of FR2 inter-band CA, similar considerations can be relevant in the case of multiple input multiple output (MIMO) with multiple TRPs. For the case of MIMO evolution, a similar scenario as the one supported by IBM may be introduced. One objective may include support of non-collocated TRPs for MIMO. Thus, it may be assumed that the UE is adjusting its spatial settings independently for each TRP to which it is receiving and transmitting.

Group based beam reporting (GBBR) indicates to the network that the UE can receive signals simultaneously, but does not provide the network any indication on the number of RS needed for beam management (BM). Additionally, the GBBR does not provide any information regarding an interruption time, independent tracking of reference signals (RS), etc.

3GPP has defined IBM and CBM for certain CA use cases, but not for use cases on the same CC (i.e., MIMO). Furthermore, GBBR has been defined for MIMO (i.e., same CC and not CA). Thus, IBM/CBM on the same CC for MIMO, and interruption time during a beam pair switch have not been addressed.

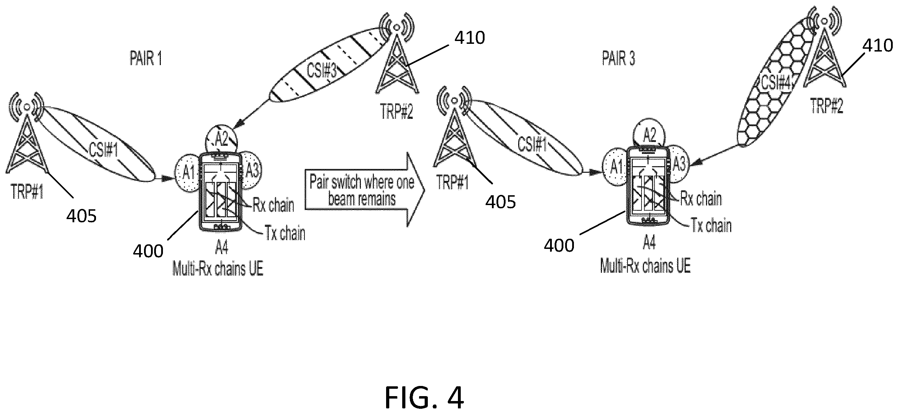

FIG. 4 illustrates an example scenario of UE beam pair switching. In particular, the example of FIG. 4 illustrates a UE 400 performing beam switching where one beam is common among the beam pairs. In this example, it may be assumed that there are independent reference signals on each beam for beam alignment and timing reference timing (i.e., UE is tracking DL-RS of each beam of the active pair). From the example of FIG. 1, and as further illustrated in the example of FIG. 4, pair 1 is CSI #1 + CSI #3 transmitted from TRP#1 405 and TRP #2, respectively. Additionally, Pair 2 is CSI #1 + CSI #4 transmitted from TRP#1 405 and TRP#2, respectively. In a single downlink control information (s-DCI) scenario, interruption of scheduling on CSI #1 cannot be avoid due to switching from Pair 1 to Pair 3. Furthermore, in a multi-DCI scenario, the UE may switch the beam pair from Pair 1 to Pair 3 (i.e., CSI #1 + CSI #3 to CSI #1 + CSI #4), where one of the beams is common among both pairs (i.e., CSI #1). In this example, reception/transmission on CSI #1 is interrupted due to the switch from pair CSI #1 + CSI #3 to pair CSI #1 + CSI #4. The switch may be executed due to a UE internal procedure for beam switching, recalibration, timing adjustments, etc. For example, the transient effect on a UE panel due to turning on/off other UE panels (due to UE implementation of the power supply and radio frequency (RF) setting preparation). This may affect the transient time for the UE to switch the beams. The disadvantage for the network (i.e., gNB) in this scenario is that the gNB cannot schedule the UE on CSI #1 on UL or DL until a transmission configuration indicator (TCI) switch to CSI #4 is complete.

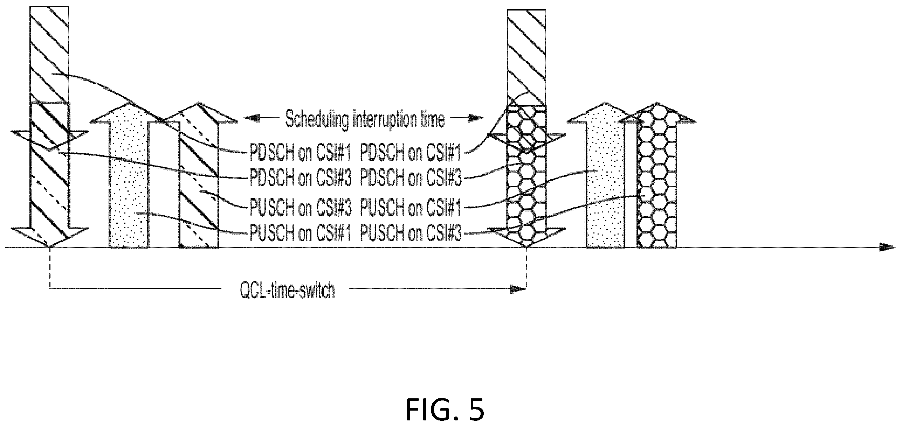

Additionally, in the m-DCI scenario, there may be no interruption of the reception/transmission on CSI #1 due to the switch from pair CSI #1 + CSI #3 to the pair CSI #1 + CSI #4. When there is no interruption/transmission on CSI #1, the UE may fully independently track spatial filters, and perform time tracking of the different TCI states without affecting any scheduling opportunities. However, as illustrated in FIG. 5, a problem arises in that the network has to assume the worst case scenario (interruption of CSI #1 during the switch from CSI #3 to CSI #4), as nothing is reported by the UE. As illustrated in FIG. 5, since the network has no knowledge on UE capability (hardware etc.), and specific ability for this beam pair switch, the network assumes interruption is needed, and the network cannot schedule the UE. Thus, the gNB misses scheduling opportunities, and the UE throughput is temporarily degraded due to the beam pair switch.

In view of the drawbacks of current beam switch configurations, the UE of certain example embodiments may provide a report (e.g., capability report) to the network indicating that beam pair switching does not cause interruption on both beams (e.g., CSI) of the pair of beams (if one beam is common to both pairs). In other example embodiments, the report may be a dynamic indication of whether specific beam pairs for the switch would cause interruption on both beams (if one beam is common to both pairs).

According to certain example embodiments, the dynamic indication may be reported via a reactive method or a pro-active method. In the reactive method, the dynamic indication may be reported after the beam pair switch (e.g., beam pair switch command) has been signaled to the UE. For example, the reactive method may occur between the beam pair switch command and the beam pair switch execution, or after the beam pair switch execution. In certain example embodiments, under the reactive method, the dynamic indication may be transmitted/signaled by being included in a layer 1 reference signal received power (L1-RSRP) reporting of a candidate beam (e.g., CSI #1, CSI #2, CSI #3, or CSI #4). In other example embodiments, the dynamic indication may be transmitted/signaled via a dedicated medium access control control element (MAC CE). In further example embodiments, the dynamic indication may be transmitted/signaled via a scheduling request (SR) for UL interruption indication. For instance, in certain example embodiments, the SR itself may indicate the interruption, or the UE could send the SR to obtain resources for L1 or for MAC-CE where it can send the information on UL interruption. Additionally, in some example embodiments, under the reactive method, the dynamic indication may be indicate whether the interruption is on DL only or UL only, or both. Furthermore, granularity may be for each channel (i.e., for one or a subset of physical downlink control channel (PDCCH), physical downlink shared channel (PDSCH), physical uplink control channel (PUCCH), physical uplink shared channel (PUSCH), and sounding reference signal (SRS)). For instance, the UE may indicate interruption only for PDCCH, but not for PDSCH. Alternatively, the UE may indicate interruption for PDCCH and PDSCH, but not for PUSCH and PUCCH. In another alternative, the UE may indicate interruption for PDSCH/PUSCH, but not for PUCCH/PDCCH. Thus, the interruption indication may be per channel for DL and UL.

As described above, the dynamic indication may be provided to the network via a pro-active method, which may occur before the indication of a beam pair switch command from the network. For example, as part of GBBR, where only pairs in GBBR that will not cause interruption when switched from one another may be reported. In some example embodiments, the report as part of GBBR may be RRC configured by the network. In other example embodiments, the report as part of GBBR may be reported by the UE as beam pairs that do not cause interruption to each other.

In other example embodiments, as part of GBBR, beam pairs that will not cause interruption when switched from one another may be flagged. In this example, the UE may report the best beam pairs from the RSRP/signal to noise ratio (SNR) perspective. Additionally, the report may flag the pairs in GBBR that will cause interruption if switched to another beam pair.

According to certain example embodiments, under the pro-active method, there may be a separate reporting in a CSI report. According to other example embodiments, UE assistance information with information about whether the UE can track the beams independently, or whether the beam pair switch will cause interruption to both beams of the pair (i.e., beam for CSI #1 and beam for CSI #3) or only one beam of the pair. For instance, the interruption may be caused only to one beam of the pair (e.g., CSI #3), or to both beams of the pair (e.g., CSI #1 and CSI #3). According to other example embodiments, under the pro-active method, the dynamic indication report may indicate whether the interruption is on DL only or on UL only, or both. Granularity may also be for each channel (i.e., for one or a subset of PDCCH, PDSCH, PUCCH, PUSCH, and SRS). For instance, the interruption may be for PDSCH, PDCCH, PUCCH, PUSCH, SRS, or a combination of any of the above.

In certain example embodiments, based on the report/indication provided by the UE, the network may use scheduling opportunities during the beam pair switch (in DL or UL, or both) for the UE that are capable of receiving/transmitting (i.e., no interruption) during the switch, or the network can choose a different beam pair to, for example, avoid interruption for less capable UEs. A less capable UE may be a UE that needs to interrupt scheduling of both beams of the pair (e.g., CSI #1 and CSI #3) when performing a pair switch. Even if the UE switches to a pair where one of the beams is the same (e.g., CSI #1 and CSI #4), the UE may still need to interrupt scheduling on both CSI #1 and CSI #3. This scenario may be informed to the network as a UE capability that the UE can never avoid the interruption of the scheduling on all CSI beams of the pair.

According to certain example embodiments, the network may select a different beam pair with a pro-active indication or with a re-active indication. In certain example embodiments, the pro-active indication may provide an indication of interruption from the UE to the network. This may imply that the network selects the preferred beam pair switch while taking into consideration the UE indication of interruption. On the other hand, with a re-active indication about interruption from the UE to the network, the UE may inform the network that the interruption is about to occur. With this information that interruption is about to occur, the network may, in response, cancel the beam pair switch where interruption is about to occur, and transmit a new beam pair switch command to the UE.

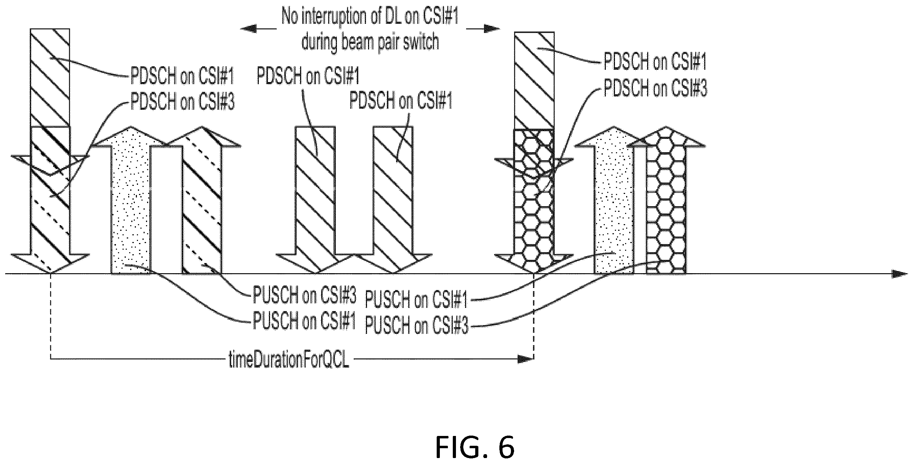

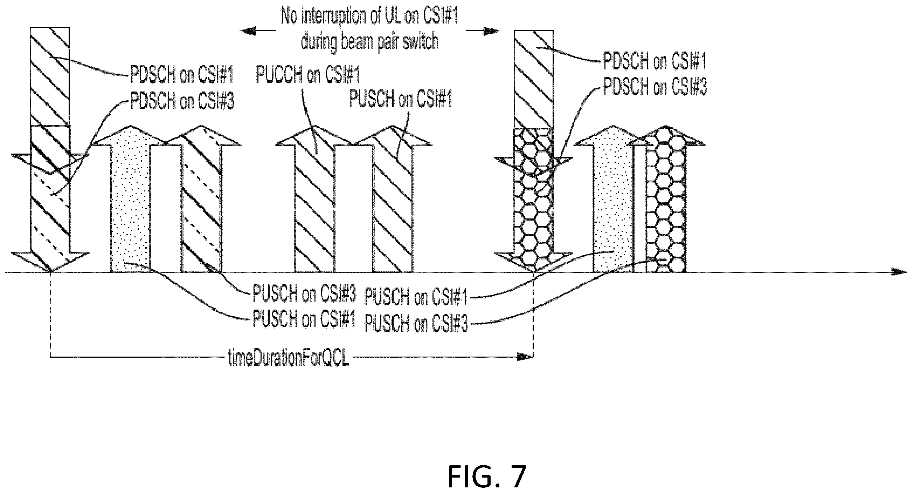

FIG. 6 illustrates an example UE indication to the network, according to certain example embodiments, and FIG. 7 illustrates another example UE indication to the network, according to certain example embodiments. For instance, in FIG. 6, the UE indicates to the network that only DL scheduling can be supported during beam pair switching from pair 1 to pair 3, where DL is uninterrupted on CSI #1 during beam pair switching. Additionally, in FIG. 7, the UE indicates to the network that only UL scheduling can be supported during beam pair switching from pair 1 to pair 3. In FIG. 7, the DL may be interrupted on CSI #1, but UL PUCCH and PUSCH is uninterrupted. Thus, according to certain example embodiments, the network may tailor the scheduling to a specific UE which may include, for example, scheduling only DL during the beam pair switch and not UL (then UL may be scheduled after the switch is completed), or vice-versa. The scheduling opportunities may be optimized by enabling the network to best serve the UEs to maximize both cell and UE throughput.

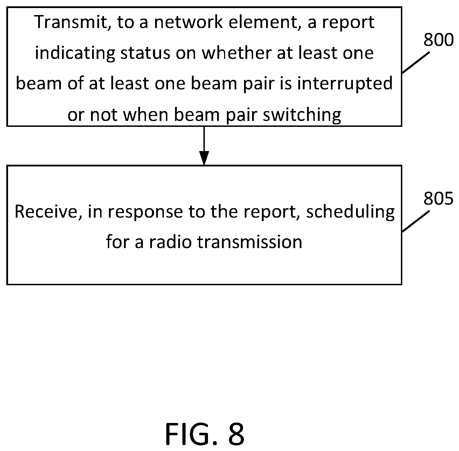

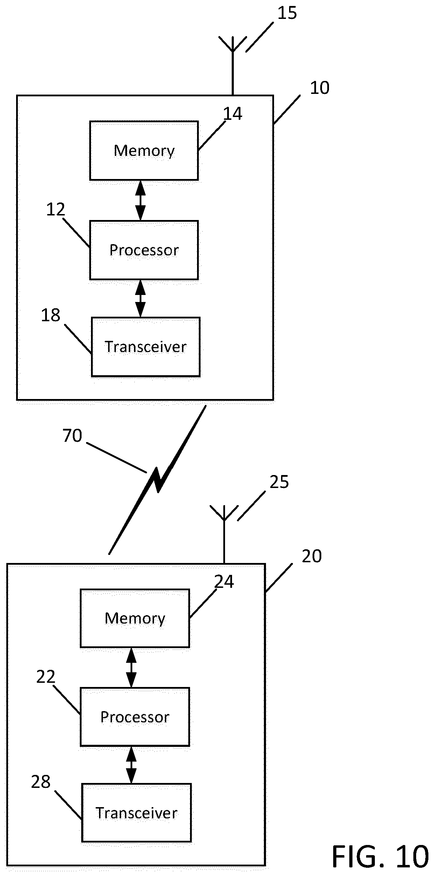

FIG. 8 illustrates an example flow diagram of a method, according to certain example embodiments. In an example embodiment, the method of FIG. 8 may be performed by a network entity, or a group of multiple network elements in a 3GPP system, such as LTE or 5G-NR. For instance, in an example embodiment, the method of FIG. 8 may be performed by a UE similar to one of apparatuses 10 or 20 illustrated in FIG. 10.

According to certain example embodiments, the method of FIG. 8 may include, at 800, transmitting, to a network element, a report indicating status on whether at least one beam of at least one beam pair is interrupted or not when beam pair switching. According to certain example embodiments, the at least one beam pair may include at least a first beam associated with a first transmit and receive point, and a second beam associated with a second transmit and receive point. According to some example embodiments, the report indicating status may indicate a period without scheduling or a no-scheduling period where the network interrupts the scheduling of the UE during a certain period corresponding to TCI switch commands. The method may also include, at 805, receiving, in response to the report, scheduling for a radio transmission.

According to certain example embodiments, the report may include for beam pair switching from a first beam pair to a second beam pair, a UE capability report indicating that beam pair switching does not cause interruption on at least one beam of the first beam pair or at least one beam of the second beam pair. According to some example embodiments, the report may further include a dynamic indication report indicating whether beam pair switching from the first beam pair to the second beam pair, would cause interruption on both beams in the first beam pair or both beams in the second beam pair. According to other example embodiments, the dynamic indication report may be transmitted after receiving a beam pair switch command, or the dynamic indication report may be transmitted before receiving the beam pair switch command.

In certain example embodiments, the dynamic indication report is transmitted in one of a L 1-RSRP reporting, a dedicated MAC CE, a scheduling request for UL interruption indication, as an indication of whether the interruption is on a DL, UL, or both DL and UL, a group based beam reporting, a CSI report, or a UE assistance information including information about a tracking ability, or whether the beam switch will cause interruption to one or more beams of the first beam pair and the second beam pair. In certain example embodiments, the first beam pair and the second beam pair include at least one common beam.

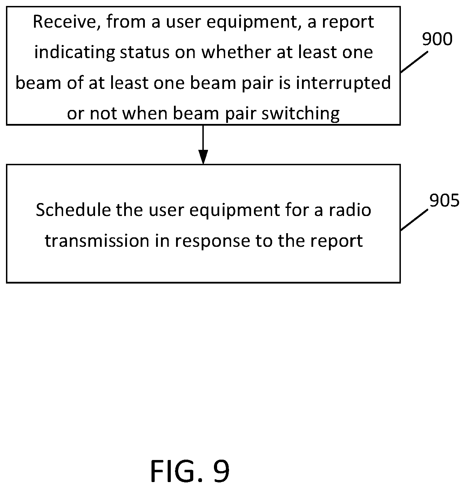

FIG. 9 illustrates an example flow diagram of another method, according to certain example embodiments. In an example embodiment, the method of FIG. 9 may be performed by a network entity, or a group of multiple network elements in a 3GPP system, such as LTE or 5G-NR. For instance, in an example embodiment, the method of FIG. 9 may be performed by the network (e.g., gNB) similar to one of apparatuses 10 or 20 illustrated in FIG. 10.

According to certain example embodiments, the method of FIG. 9 may include, at 900, receiving, from a UE, a report indicating status on whether at least one beam of at least one beam pair is interrupted or not when beam pair switching. According to certain example embodiments, the at least one beam pair may include at least a first beam associated with a first transmit and receive point, and a second beam associated with a second transmit and receive point. The method may also include, at 905, scheduling the UE for a radio transmission in response to the report.

According to certain example embodiments, the report may include, for beam pair switching from a first beam pair to a second beam pair, a UE capability report indicating that beam pair switching does not cause interruption on at least one beam of the first beam pair or at least one beam of the second beam pair. According to some example embodiments, the report may also include a dynamic indication report indicating whether beam pair switching from the first beam pair to the second beam pair, would cause interruption on both beams in the first beam pair or both beams in the second beam pair. According to other example embodiments, the dynamic indication report may be received after transmitting a beam pair switch command, or the dynamic indication report may be received before transmitting the beam pair switch command.

In certain example embodiments, the dynamic indication report is received in one of a L1-RSRP reporting, a dedicated MAC CE, a scheduling request for UL interruption indication, as an indication of whether the interruption is on a DL, UL, or both DL and UL, a group based beam reporting, a CSI report, or a UE assistance information including information about a tracking ability, or whether the beam switch will cause interruption to one or more beams of the first beam pair and the second beam pair. In some example embodiments, the first beam pair and the second beam pair include at least one common beam. In some example embodiments, the method may also include, in response to receiving the dynamic indication report, selecting a preferred beam pair switch for the UE while taking into consideration the report. In other example embodiments, the method may further include, in response to receiving the dynamic indication report, cancelling the beam pair switch when the report indicates that interruption is about to occur, transmitting a new beam pair switch command to the UE.

FIG. 10 illustrates a set of apparatuses 10 and 20 according to certain example embodiments. In certain example embodiments, apparatuses 10 and 20 may be elements in a communications network or associated with such a network. For example, apparatus 10 may be UE, and apparatus 20 may be a network (i.e., gNB).

In some example embodiments, apparatuses 10 and 20 may include one or more processors, one or more computer-readable storage medium (for example, memory, storage, or the like), one or more radio access components (for example, a modem, a transceiver, or the like), and/or a user interface. In some example embodiments, apparatuses 10 and 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatuses 10 and 20 may include components or features not shown in FIG. 10.

As illustrated in the example of FIG. 10, apparatuses 10 and 20 may include or be coupled to a processors 12 and 22 for processing information and executing instructions or operations. Processors 12 and 22 may be any type of general or specific purpose processor. In fact, processors 12 and 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processors 12 and 22 is shown in FIG. 10, multiple processors may be utilized according to other example embodiments. For example, it should be understood that, in certain example embodiments, apparatuses 10 and 20 may include two or more processors that may form a multiprocessor system (e.g., in this case processors 12 may represent a multiprocessor) that may support multiprocessing. According to certain example embodiments, the multiprocessor system may be tightly coupled or loosely coupled (e.g., to form a computer cluster).

Processors 12 and 22 may perform functions associated with the operation of apparatuses 10 and 20 including, as some examples, precoding of antenna gain/phase parameters, encoding and decoding of individual bits forming a communication message, formatting of information, and overall control of the apparatuses 10 and 20, including processes and examples illustrated in FIGs. 1-9.

Apparatuses 10 and 20 may further include or be coupled to a memories 14 and 24 (internal or external), which may be respectively coupled to processors 12 and 24 for storing information and instructions that may be executed by processors 12 and 24. Memories 14 and 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memories 14 and 24 can be comprised of any combination of random access memory (RAM), read only memory (ROM), static storage such as a magnetic or optical disk, hard disk drive (HDD), or any other type of non-transitory machine or computer readable media. The instructions stored in memories 14 and 24 may include program instructions, computer program code that, when executed by processors 12 and 22, enable the apparatuses 10 and 20 to perform tasks as described herein.

In certain example embodiments, apparatuses 10 and 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 12 and 22 and/or apparatuses 10 and 20 to perform any of the methods and examples illustrated in FIGs. 1-10.

In some example embodiments, apparatuses 10 and 20 may also include or be coupled to one or more antennas 15 and 25 for receiving a downlink signal and for transmitting via an UL from apparatuses 10 and 20. Apparatuses 10 and 20 may further include a transceivers 18 and 28 configured to transmit and receive information. The transceivers 18 and 28 may also include a radio interface (e.g., a modem) coupled to the antennas 15 and 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an UL.

For instance, transceivers 18 and 28 may be configured to modulate information on to a carrier waveform for transmission by the antennas 15 and 25 and demodulate information received via the antenna 15 and 25 for further processing by other elements of apparatuses 10 and 20. In other example embodiments, transceivers 18 and 28 may be capable of transmitting and receiving signals or data directly. Additionally or alternatively, in some example embodiments, apparatus 10 may include an input and/or output device (I/O device). In certain example embodiments, apparatuses 10 and 20 may further include a user interface, such as a graphical user interface or touchscreen.

In certain example embodiments, memories 14 and 34 store software modules that provide functionality when executed by processors 12 and 22. The modules may include, for example, an operating system that provides operating system functionality for apparatuses 10 and 20. The memory may also store one or more functional modules, such as an application or program, to provide additional functionality for apparatuses 10 and 20. The components of apparatuses 10 and 20 may be implemented in hardware, or as any suitable combination of hardware and software. According to certain example embodiments, apparatuses 10 and 20 may optionally be configured to communicate each other (in any combination) via a wireless or wired communication links 70 according to any radio access technology, such as NR.

According to certain example embodiments, processors 12 and 22 and memories 14 and 24 may be included in or may form a part of processing circuitry or control circuitry. In addition, in some example embodiments, transceivers 18 and 28 may be included in or may form a part of transceiving circuitry.

For instance, in certain example embodiments, apparatus 10 may be controlled by memory 14 and processor 12 to transmit, to a network element, a report indicating status on whether at least one beam of at least one beam pair is interrupted or not when beam pair switching. According to certain example embodiments, the at least one beam pair may include at least a first beam associated with a first transmit and receive point, and a second beam associated with a second transmit and receive point. Apparatus 10 may also be controlled by memory 14 and processor 12 to receive, in response to the report, scheduling for a radio transmission.

In other example embodiments, apparatus 20 may be controlled by memory 24 and processor 22 to receive, from a UE, a report indicating status on whether at least one beam of at least one beam pair is interrupted or not when beam pair switching. According to certain example embodiments, the at least one beam pair may include at least a first beam associated with a first transmit and receive point, and a second beam associated with a second transmit and receive point. Apparatus 20 may also be controlled by memory 24 and processor 22 to schedule the UE for a radio transmission in response to the report.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

An aspect may provide a method, comprising: transmitting, to a network element, a report indicating status on whether at least one beam of at least one beam pair is interrupted or not when beam pair switching, wherein the at least one beam pair comprises at least a first beam associated with a first transmit and receive point, and a second beam associated with a second transmit and receive point; and receiving, in response to the report, scheduling for a radio transmission. In some example embodiments, the report comprises: for beam pair switching from a first beam pair to a second beam pair, a user equipment capability report indicating that beam pair switching does not cause interruption on at least one beam of the first beam pair or at least one beam of the second beam pair. In some example embodiments the report comprises: a dynamic indication report indicating whether beam pair switching from the first beam pair to the second beam pair, would cause interruption on both beams in the first beam pair or both beams in the second beam pair. In some example embodiments the dynamic indication report is transmitted after receiving a beam pair switch command, or the dynamic indication report is transmitted before receiving the beam pair switch command. In some example embodiments the dynamic indication report is transmitted in one of the following: a layer 1 reference signal received power reporting, a dedicated medium access control control element, a scheduling request for uplink interruption indication, as an indication of whether the interruption is on a downlink, uplink, or both downlink and uplink, a group based beam reporting, a channel state information report, or a user equipment assistance information comprising information about a tracking ability, or whether the beam switch will cause interruption to one or more beams of the first beam pair and the second beam pair. In some example embodiments the first beam pair and the second beam pair include at least one common beam.

An aspect may provide a method, comprising: receiving, from a user equipment, a report indicating status on whether at least one beam of at least one beam pair is interrupted or not when beam pair switching, wherein the at least one beam pair comprises at least a first beam associated with a first transmit and receive point, and a second beam associated with a second transmit and receive point; and scheduling the user equipment for a radio transmission in response to the report. In some example embodiments the report comprises: for beam pair switching from a first beam pair to a second beam pair, a user equipment capability report indicating that beam pair switching does not cause interruption on at least one beam of the first beam pair or at least one beam of the second beam pair. In some example embodiments the report comprises: a dynamic indication report indicating whether beam pair switching from the first beam pair to the second beam pair, would cause interruption on both beams in the first beam pair or both beams in the second beam pair. In some example embodiments the dynamic indication report is received after transmitting a beam pair switch command, or the dynamic indication report is received before transmitting the beam pair switch command. In some example embodiments the dynamic indication report is received in one of the following: a layer 1 reference signal received power reporting, a dedicated medium access control control element, a scheduling request for uplink interruption indication, as an indication of whether the interruption is on a downlink, uplink, or both downlink and uplink, a group based beam reporting, a channel state information report, or a user equipment assistance information comprising information about a tracking ability, or whether the beam switch will cause interruption to one or more beams of the first beam pair and the second beam pair. In some example embodiments the first beam pair and the second beam pair include at least one common beam. In some example embodiments the method further comprises, in response to receiving the dynamic indication report selecting a preferred beam pair switch for the user equipment while taking into consideration the report. In some example embodiments further comprising, in response to receiving the dynamic indication report: cancelling the beam pair switch when the report indicates that interruption is about to occur; and transmitting a new beam pair switch command to the user equipment.

An aspect may provide an apparatus, comprising; at least one processor; and at least one memory comprising computer program code stored thereon which when executed by the at least one processor, cause the apparatus at least to: transmit, to a network element, a report indicating status on whether at least one beam of at least one beam pair is interrupted or not when beam pair switching, wherein the at least one beam pair comprises at least a first beam associated with a first transmit and receive point, and a second beam associated with a second transmit and receive point; and receive, in response to the report, scheduling for a radio transmission. The report may comprise: for beam pair switching from a first beam pair to a second beam pair, a user equipment capability report indicating that beam pair switching does not cause interruption on at least one beam of the first beam pair or at least one beam of the second beam pair. The report may comprise: a dynamic indication report indicating whether beam pair switching from the first beam pair to the second beam pair, would cause interruption on both beams in the first beam pair or both beams in the second beam pair. In some cases the dynamic indication report may be received after transmitting a beam pair switch command, or the dynamic indication report is received before transmitting the beam pair switch command. In some cases the dynamic indication report is received in one of the following: a layer 1 reference signal received power reporting, a dedicated medium access control control element, a scheduling request for uplink interruption indication, as an indication of whether the interruption is on a downlink, uplink, or both downlink and uplink, a group based beam reporting, a channel state information report, or a user equipment assistance information comprising information about a tracking ability, or whether the beam switch will cause interruption to one or more beams of the first beam pair and the second beam pair.

Certain example embodiments may be directed to an apparatus that includes means for performing any of the methods described herein including, for example, means for transmitting, to a network element, a report indicating status on whether at least one beam of at least one beam pair is interrupted or not when beam pair switching. According to certain example embodiments, the at least one beam pair may include at least a first beam associated with a first transmit and receive point, and a second beam associated with a second transmit and receive point. The apparatus may also include means for receiving, in response to the report, scheduling for a radio transmission.

Additional example embodiments may be directed to an apparatus that includes means for performing any of the methods described herein including, for example, means for receiving, from a UE, a report indicating status on whether at least one beam of at least one beam pair is interrupted or not when beam pair switching. According to certain example embodiments, the at least one beam pair may include at least a first beam associated with a first transmit and receive point, and a second beam associated with a second transmit and receive point. The apparatus may also include means for scheduling the UE for a radio transmission in response to the report.

Certain example embodiments described herein provide several technical improvements, enhancements, and /or advantages. For instance, in some example embodiments, it may be possible to for the network to tailor the scheduling to the specific UE. For example, the network may be able to schedule only DL during the beam pair switch, and not UL, or vice-versa. Additionally, in other example embodiments, the scheduling opportunities may be optimized, which may enable the network to best serve the UEs to maximize both cell and UE throughput. In further example embodiments, the network may optimize cell throughput and UE throughput. When the network knows that switching from pair 1 (e.g., CSI #1 + CSI #3) to pair 3 (e.g., CSI #1 + CSI #4) will cause scheduling interruption on both beams of the pairs, the network may try to find another pair to switch the UE to, for example, from pair 1 to pair 4 (e.g., CSI #1 + CSI #2) instead (if UE has reported that this switch would not cause interruption of the scheduling on CSI #1).

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- 5GS: 5G System
- BB: Baseband
- BS: Base Station
- CA: Carrier Aggregation
- CBM: Common Beam Management
- CC: Component Carrier
- CSI: Channel State Information
- DCI: Downlink Control Information
- DL: Downlink
- eNB: Enhanced Node B
- E-UTRAN: Evolved UTRAN
- GBBR: Group Based Beam Reporting
- gNB: 5G or Next Generation NodeB
- IBM: Independent Beam Management
- L1-RSRP: Layer 1 Reference Signal Received Power
- LTE: Long Term Evolution
- m-DCI: Multi-DCI
- m-TRP: Multiple Transmit and Receive Point
- NR: New Radio
- NW: Network
- PDCCH: Physical Downlink Control Channel
- PDSCH: Physical Downlink Shared Channel
- PUCCH: Physical Uplink Control Channel
- PUSCH: Physical Uplink Shared Channel
- RS: Reference Signal
- s-DCI: Single-DCI
- SINR: Signal to Interference Ratio
- SRS: Sounding Reference Signal
- UE: User Equipment
- UL: Uplink

## Claims

1. An apparatus (10, 100, 400), comprising:
at least one processor (12); and
at least one memory (14) comprising computer program code stored thereon which when executed by the at least one processor, cause the apparatus at least to:
transmit, to a network element (20), a report indicating status on whether at least one beam of at least one beam pair is interrupted or not when beam pair switching, wherein the at least one beam pair comprises at least a first beam associated with a first transmit and receive point (105, 405), and a second beam associated with a second transmit and receive point (115, 415); and
receive, in response to the report, scheduling for a radio transmission.

2. The apparatus according to claim 1, wherein the report comprises:
for beam pair switching from a first beam pair to a second beam pair, a user equipment capability report indicating that beam pair switching does not cause interruption on at least one beam of the first beam pair or at least one beam of the second beam pair.

3. The apparatus according to claim 1,
wherein the report comprises:
a dynamic indication report indicating whether beam pair switching from a first beam pair to a second beam pair, would cause interruption on both beams in the first beam pair or both beams in the second beam pair.

4. The apparatus according to claim 3,
wherein the apparatus is caused to transmit the dynamic indication report after receiving a beam pair switch command.

5. The apparatus according to claim 3,
wherein the apparatus is caused to transmit the dynamic indication report before receiving the beam pair switch command.

6. The apparatus according to claim 3, 4 or 5, wherein the apparatus is caused to transmit the dynamic indication report in one of the following:
a layer 1 reference signal received power reporting,
a dedicated medium access control control element,
a scheduling request for uplink interruption indication, or
as an indication of whether the interruption is on a downlink, uplink, or both downlink and uplink,
a group based beam reporting,
a channel state information report, or
a user equipment assistance information comprising information about a tracking ability, or whether the beam switch will cause interruption to one or more beams of the first beam pair and the second beam pair.

7. The apparatus according to any of claims 2-6, wherein the first beam pair and the second beam pair include at least one common beam.

8. A method, comprising:
transmitting (800), to a network element, a report indicating status on whether at least one beam of at least one beam pair is interrupted or not when beam pair switching, wherein the at least one beam pair comprises at least a first beam associated with a first transmit and receive point, and a second beam associated with a second transmit and receive point; and
receiving (805), in response to the report, scheduling for a radio transmission.

9. An apparatus (20), comprising:
at least one processor (22); and
at least one memory (24) comprising computer program code,
the at least one memory comprising computer program code stored thereon that, when executed by the at least one processor, cause the apparatus at least to:
receive, from a user equipment, a report indicating status on whether at least one beam of at least one beam pair is interrupted or not when beam pair switching, wherein the at least one beam pair comprises at least a first beam associated with a first transmit and receive point, and a second beam associated with a second transmit and receive point; and
schedule the user equipment for a radio transmission in response to the report.

10. The apparatus according to claim 9, wherein the report comprises:
for beam pair switching from a first beam pair to a second beam pair, a user equipment capability report indicating that beam pair switching does not cause interruption on at least one beam of the first beam pair or at least one beam of the second beam pair.

11. The apparatus according to claim 9, wherein the report comprises:
a dynamic indication report indicating whether beam pair switching from a first beam pair to a second beam pair, would cause interruption on both beams in the first beam pair or both beams in the second beam pair.

12. The apparatus according to any of claim 11, the apparatus being further caused to, in response to receiving the dynamic indication report:
select a preferred beam pair switch for the user equipment while taking into consideration the report.

13. The apparatus according to any of c claims 11-12, the apparatus being further caused to, in response to receiving the dynamic indication report:
cancel the beam pair switch when the report indicates that interruption is about to occur; and
transmit a new beam pair switch command to the user equipment.

14. A method, comprising:
receiving (900), from a user equipment, a report indicating status on whether at least one beam of at least one beam pair is interrupted or not when beam pair switching, wherein the at least one beam pair comprises at least a first beam associated with a first transmit and receive point, and a second beam associated with a second transmit and receive point; and
scheduling (905) the user equipment for a radio transmission in response to the report.

15. A computer program comprising instructions which, when the program is executed by a computer, cause the computer to carry out the method of claims 8 or 14.

## Patentansprüche

1. Vorrichtung (10, 100, 400), umfassend:
mindestens einen Prozessor (12); und
mindestens einen Speicher (14), der darauf gespeicherten Computerprogrammcode umfasst, der, wenn er durch den mindestens einen Prozessor ausgeführt wird, die Vorrichtung mindestens veranlasst:
einem Netzelement (20) einen Bericht zu übermitteln, der einen Status darüber anzeigt, ob mindestens ein Strahl mindestens eines Strahlpaares beim Strahlpaarumschalten unterbrochen ist oder nicht, wobei das mindestens eine Strahlpaar mindestens einen ersten Strahl, der einem ersten Sende- und Empfangspunkt (105, 405) zugeordnet ist, und einen zweiten Strahl, der einem zweiten Sende- und Empfangspunkt (115, 415) zugeordnet ist, umfasst; und
als Reaktion auf den Bericht eine Planung für eine Funkübertragung zu empfangen.

2. **.** Vorrichtung nach Anspruch 1, wobei der Bericht umfasst:
für ein Strahlpaarumschalten von einem ersten Strahlpaar zu einem zweiten Strahlpaar einen Fähigkeitsbericht des Nutzergeräts, der anzeigt, dass das Strahlpaarumschalten auf mindestens einem Strahl des ersten Strahlpaares oder auf mindestens einem Strahl des zweiten Strahlpaares keine Unterbrechung verursacht.

3. **.** Vorrichtung nach Anspruch 1, wobei der Bericht umfasst:
einen dynamischen Anzeigebericht, der anzeigt, ob das Strahlpaarumschalten von einem ersten Strahlpaar zu einem zweiten Strahlpaar eine Unterbrechung bei beiden Strahlen des ersten Strahlpaares oder bei beiden Strahlen des zweiten Strahlpaares verursachen würde.

4. **.** Vorrichtung nach Anspruch 3, wobei die Vorrichtung veranlasst wird, den dynamischen Anzeigebericht nach dem Empfang eines Strahlpaarumschaltbefehls zu übermitteln.

5. **.** Vorrichtung nach Anspruch 3, wobei die Vorrichtung veranlasst wird, den dynamischen Anzeigebericht vor dem Empfang des Strahlpaarumschaltbefehls zu übermitteln.

6. **.** Vorrichtung nach Anspruch 3, 4 oder 5, wobei die Vorrichtung veranlasst wird, den dynamischen Anzeigebericht in einem der folgenden Elemente zu übermitteln:
einem Bericht über die empfangene Leistung des Schicht-1-Referenzsignals,
einem dedizierten Medium-Access-Control-Steuerungselement,
einer Planungsanforderung für eine Unterbrechungsanzeige in der Aufwärtsstrecke, oder
einer Anzeige, ob die Unterbrechung auf einer Abwärtsstrecke, einer Aufwärtsstrecke oder beidem liegt,
einem gruppenbasierten Strahlbericht,
einem Kanalzustandsinformationsbericht, oder
einer Nutzergerät-Assistenzinformation, die Informationen über eine Verfolgungsfähigkeit oder darüber umfasst, ob das Strahlumschalten eine Unterbrechung an einem oder mehreren Strahlen des ersten Strahlpaares und des zweiten Strahlpaares verursachen wird.

7. **.** Vorrichtung nach einem der Ansprüche 2 bis 6, wobei das erste Strahlpaar und das zweite Strahlpaar mindestens einen gemeinsamen Strahl umfassen.

8. Verfahren, umfassend:
Übermitteln (800) eines Berichts an ein Netzelement, der einen Status darüber anzeigt, ob mindestens ein Strahl mindestens eines Strahlpaares beim Strahlpaarumschalten unterbrochen ist oder nicht, wobei das mindestens eine Strahlpaar mindestens einen ersten Strahl, der einem ersten Sende- und Empfangspunkt zugeordnet ist, und einen zweiten Strahl, der einem zweiten Sende- und Empfangspunkt zugeordnet ist, umfasst; und
Empfangen (805) einer Planung für eine Funkübertragung als Reaktion auf den Bericht.

9. Vorrichtung (20), umfassend:
mindestens einen Prozessor (22); und
mindestens einen Speicher (24), der Computerprogrammcode umfasst,
wobei der mindestens eine Speicher darauf gespeicherten Computerprogrammcode umfasst, der, wenn er durch den mindestens einen Prozessor ausgeführt wird, die Vorrichtung mindestens veranlasst:
von einem Nutzergerät einen Bericht zu empfangen, der einen Status darüber anzeigt, ob mindestens ein Strahl mindestens eines Strahlpaares beim Strahlpaarumschalten unterbrochen ist oder nicht, wobei das mindestens eine Strahlpaar mindestens einen ersten Strahl, der einem ersten Sende- und Empfangspunkt zugeordnet ist, und einen zweiten Strahl, der einem zweiten Sende- und Empfangspunkt zugeordnet ist, umfasst; und
das Nutzergerät als Reaktion auf den Bericht für eine Funkübertragung einzuplanen.

10. **.** Vorrichtung nach Anspruch 9, wobei der Bericht umfasst:
für ein Strahlpaarumschalten von einem ersten Strahlpaar zu einem zweiten Strahlpaar einen Fähigkeitsbericht des Nutzergeräts, der anzeigt, dass das Strahlpaarumschalten auf mindestens einem Strahl des ersten Strahlpaares oder auf mindestens einem Strahl des zweiten Strahlpaares keine Unterbrechung verursacht.

11. **.** Vorrichtung nach Anspruch 9, wobei der Bericht umfasst:
einen dynamischen Anzeigebericht, der anzeigt, ob das Strahlpaarumschalten von einem ersten Strahlpaar zu einem zweiten Strahlpaar eine Unterbrechung bei beiden Strahlen des ersten Strahlpaares oder bei beiden Strahlen des zweiten Strahlpaares verursachen würde.

12. **.** Vorrichtung nach einem der Ansprüche 11, wobei die Vorrichtung weiter veranlasst wird, als Reaktion auf den Empfang des dynamischen Anzeigeberichts:
ein bevorzugtes Strahlpaarumschalten für das Nutzergerät auszuwählen, wobei der Bericht berücksichtigt wird.

13. **.** Vorrichtung nach einem der Ansprüche 11 bis 12, wobei die Vorrichtung weiter veranlasst wird, als Reaktion auf den Empfang des dynamischen Anzeigeberichts:
das Strahlpaarumschalten abzubrechen, wenn der Bericht anzeigt, dass eine Unterbrechung bevorstehen wird; und
dem Nutzergerät einen neuen Strahlpaarumschaltbefehl zu übermitteln.

14. Verfahren, umfassend:
Empfangen (900) von einem Nutzergerät eines Berichts, der einen Status darüber anzeigt, ob mindestens ein Strahl mindestens eines Strahlpaares beim Strahlpaarumschalten unterbrochen ist oder nicht, wobei das mindestens eine Strahlpaar mindestens einen ersten Strahl, der einem ersten Sende- und Empfangspunkt zugeordnet ist, und einen zweiten Strahl, der einem zweiten Sende- und Empfangspunkt zugeordnet ist, umfasst; und
Einplanen (905) des Nutzergeräts für eine Funkübertragung als Reaktion auf den Bericht.

15. **.** Computerprogramm, das Anweisungen umfasst, die, wenn das Programm durch einen Computer ausgeführt wird, den Computer veranlassen, das Verfahren nach Anspruch 8 oder 14 durchzuführen.

## Revendications

1. Un appareil (10, 100, 400), comprenant :
au moins un processeur (12) ; et
au moins une mémoire (14) comprenant un code de programme informatique stocké sur celle-ci, lequel, lorsqu'il est exécuté par l'au moins un processeur, amène l'appareil au moins à :
émettre, à destination d'un élément de réseau (20), un rapport indiquant un statut quant au fait qu'au moins un faisceau d'au moins une paire de faisceaux est interrompu ou non lors d'une commutation de paire de faisceaux, dans lequel l'au moins une paire de faisceaux comprend au moins un premier faisceau associé à un premier point d'émission et de réception (105, 405), et un second faisceau associé à un second point d'émission et de réception (115, 415) ; et
recevoir, en réponse au rapport, une planification pour une transmission radio.

2. **.** L'appareil selon la revendication 1, dans lequel le rapport comprend :
pour une commutation de paire de faisceaux d'une première paire de faisceaux à une seconde paire de faisceaux, un rapport de capacité d'équipement utilisateur indiquant que la commutation de paire de faisceaux ne provoque pas d'interruption sur au moins un faisceau de la première paire de faisceaux ou sur au moins un faisceau de la seconde paire de faisceaux.

3. **.** L'appareil selon la revendication 1, dans lequel le rapport comprend :
un rapport d'indication dynamique indiquant si la commutation de paire de faisceaux d'une première paire de faisceaux à une seconde paire de faisceaux provoquerait une interruption sur les deux faisceaux de la première paire de faisceaux ou sur les deux faisceaux de la seconde paire de faisceaux.

4. **.** L'appareil selon la revendication 3, dans lequel l'appareil est amené à émettre le rapport d'indication dynamique après avoir reçu une commande de commutation de paire de faisceaux.

5. **.** L'appareil selon la revendication 3, dans lequel l'appareil est amené à émettre le rapport d'indication dynamique avant de recevoir la commande de commutation de paire de faisceaux.

6. **.** L'appareil selon les revendications 3, 4 ou 5, dans lequel l'appareil est amené à émettre le rapport d'indication dynamique dans l'un des éléments suivants :
un rapport de puissance de réception du signal de référence de couche 1,
un élément de commande d'accès au support dédié,
une demande de planification pour une indication d'interruption en liaison montante, ou
une indication quant au fait que l'interruption porte sur une liaison descendante, une liaison montante, ou les deux,
un rapport de faisceau basé sur des groupes,
un rapport d'informations d'état du canal, ou
une information d'assistance d'équipement utilisateur comprenant des informations sur une capacité de suivi, ou quant au fait que la commutation de faisceaux provoquera une interruption sur un ou plusieurs faisceaux de la première paire de faisceaux et de la seconde paire de faisceaux.

7. **.** L'appareil selon l'une quelconque des revendications 2 à 6, dans lequel la première paire de faisceaux et la seconde paire de faisceaux comprennent au moins un faisceau commun.

8. Un procédé, comprenant :
émettre (800), à destination d'un élément de réseau, un rapport indiquant un statut quant au fait qu'au moins un faisceau d'au moins une paire de faisceaux est interrompu ou non lors d'une commutation de paire de faisceaux, dans lequel l'au moins une paire de faisceaux comprend au moins un premier faisceau associé à un premier point d'émission et de réception, et un second faisceau associé à un second point d'émission et de réception ; et
recevoir (805), en réponse au rapport, une planification pour une transmission radio.

9. Un appareil (20), comprenant :
au moins un processeur (22) ; et
au moins une mémoire (24) comprenant un code de programme informatique,
l'au moins une mémoire comprenant un code de programme informatique stocké sur celle-ci qui, lorsqu'il est exécuté par l'au moins un processeur, amène l'appareil au moins à :
recevoir, en provenance d'un équipement utilisateur, un rapport indiquant un statut quant au fait qu'au moins un faisceau d'au moins une paire de faisceaux est interrompu ou non lors d'une commutation de paire de faisceaux, dans lequel l'au moins une paire de faisceaux comprend au moins un premier faisceau associé à un premier point d'émission et de réception, et un second faisceau associé à un second point d'émission et de réception ; et
planifier l'équipement utilisateur pour une transmission radio en réponse au rapport.

10. **.** L'appareil selon la revendication 9, dans lequel le rapport comprend :
pour une commutation de paire de faisceaux d'une première paire de faisceaux à une seconde paire de faisceaux, un rapport de capacité d'équipement utilisateur indiquant que la commutation de paire de faisceaux ne provoque pas d'interruption sur au moins un faisceau de la première paire de faisceaux ou sur au moins un faisceau de la seconde paire de faisceaux.

11. **.** L'appareil selon la revendication 9, dans lequel le rapport comprend :
un rapport d'indication dynamique indiquant si la commutation de paire de faisceaux d'une première paire de faisceaux à une seconde paire de faisceaux provoquerait une interruption sur les deux faisceaux de la première paire de faisceaux ou sur les deux faisceaux de la seconde paire de faisceaux.

12. **.** L'appareil selon l'une quelconque des revendications 11, l'appareil étant en outre amené à, en réponse à la réception du rapport d'indication dynamique :
sélectionner une commutation de paire de faisceaux préférée pour l'équipement utilisateur tout en prenant en compte le rapport.

13. **.** L'appareil selon l'une quelconque des revendications 11 à 12, l'appareil étant en outre amené à, en réponse à la réception du rapport d'indication dynamique :
annuler la commutation de paire de faisceaux lorsque le rapport indique qu'une interruption est sur le point de se produire ; et
émettre une nouvelle commande de commutation de paire de faisceaux à destination de l'équipement utilisateur.

14. Un procédé, comprenant :
recevoir (900), en provenance d'un équipement utilisateur, un rapport indiquant un statut quant au fait qu'au moins un faisceau d'au moins une paire de faisceaux est interrompu ou non lors d'une commutation de paire de faisceaux, dans lequel l'au moins une paire de faisceaux comprend au moins un premier faisceau associé à un premier point d'émission et de réception, et un second faisceau associé à un second point d'émission et de réception ; et
planifier (905) l'équipement utilisateur pour une transmission radio en réponse au rapport.

15. **.** Un programme informatique comprenant des instructions qui, lorsque le programme est exécuté par un ordinateur, amènent l'ordinateur à mettre en œuvre le procédé des revendications 8 ou 14.
